Europäisches Patentamt

European Patent Office

Office européen des brevets

(19)

(11) Veröffentlichungsnummer: **0 281 165 B1**

# (12) EUROPÄISCHE PATENTSCHRIFT

(45) Veröffentlichungstag der Patentschrift:
16.10.91 Patentblatt 91/42

(51) Int. Cl.[5]: **F23C 11/02, B01J 8/34,**
**F22B 31/00, C10J 3/56**

(21) Anmeldenummer: **88200087.0**

(22) Anmeldetag: **20.01.88**

(54) **Wirbelschichtanlage.**

(30) Priorität: **28.02.87 DE 3706538**

(43) Veröffentlichungstag der Anmeldung:
**07.09.88 Patentblatt 88/36**

(45) Bekanntmachung des Hinweises auf die
Patenterteilung:
**16.10.91 Patentblatt 91/42**

(84) Benannte Vertragsstaaten:
**AT BE CH DE ES FR GB GR IT LI NL SE**

(56) Entgegenhaltungen:
**EP-A- 0 041 648**
**DE-A- 2 539 546**
**US-A- 3 908 284**
**PATENT ABSTRACTS OF JAPAN, Band 7, Nr.**
**95 (M-209)[1240], 21. April 1983; & JP-A-58 19**
**614 (BABCOCK HITACHI K.K.) 04-02-1983**

(73) Patentinhaber: **METALLGESELLSCHAFT AG**
**Reuterweg 14 Postfach 3724**
**W-6000 Frankfurt/M.1 (DE)**

(72) Erfinder: **Beisswenger, Hans, Dipl.-Ing.**
**Freiliggrathstrasse 2**
**W-6232 Bad Soden (DE)**
Erfinder: **Knoche, Ronald, Dr.-Ing.**
**Brentanostrasse 8**
**W-6000 Frankfurt am Main (DE)**
Erfinder: **Frank, Wolfgang, Dipl.-Ing.**
**Egerlandstrasse 6**
**W-6236 Eschborn 2 (DE)**

## Beschreibung

Die Erfindung betrifft eine aus Wirbelschichtreaktor, Feststoffabscheider und Rückführleitung gebildete Wirbelschichtanlage zur Durchführung von exothermen Prozessen in der zirkulierenden Wirbelschicht mit Leitungen zur Zufuhr sauerstoffhaltiger Primärgase durch den Boden des Wirbelschichtreaktors und Leitungen zur Zufuhr sauerstoffhaltiger Sekundärgase in eine Höhe von mindestens 1 m über dem Reaktorboden, jedoch maximal 30% der Reaktorhöhe, sowie einer zwischen Primär- und Sekundärgaszuführung in den Wirbelschichtreaktor mündenden Brennstoffleitung.

Mit zirkulierenden Wirbelschichten arbeitende Verfahren und Vorrichtungen, insbesondere auch zur Verbrennung kohlenstoffhaltiger Materialien, haben sich als äußerst vorteilhaft erwiesen. Sie sind gegenüber solchen, die mit sogenannten klassischen oder konventionellen Wirbelschichten betrieben werden, aus vielerlei Gründen überlegen.

Speziell für Verbrennungsprozesse ist das Basisverfahren in der DE-AS 2539546 (entsprechend US-PS 4165717) beschrieben. Es sieht vor, die Verbrennung zweistufig vorzunehmen und die Verbrennungswärme mit Hilfe von Kühlflächen, die oberhalb der Sekundärgaszufuhr im Wirbelschichtreaktor angeordnet sind, abzuführen. Der besondere Vorzug des Verfahrens besteht darin, daß man den Verbrennungsprozeß in technisch einfacher Weise an den Leistungsbedarf anpassen kann, indem im oberen Reaktorraum die Suspensionsdichte und damit der Wärmeübergang auf die Kühlflächen geregelt wird.

Bei dem Verbrennungsprozeß mit zirkulierender Wirbelschicht gemäß DE-OS 2624302 (entsprechend US-PS 4111158) ist vorgesehen, die Verbrennungswärme zum Teil oder insgesamt in einem dem Wirbelschichtreaktor nachgeschalteten Wirbelschichtkühler zu entnehmen und gekühlten Feststoff zur Konstanthaltung der Temperatur in den Wirbelschichtreaktor zurückzuführen. Die Anpassung an den Leistungsbedarf erfolgt hierbei durch Vergrößerung oder Verringerung des über den Wirbelschichtkühler und danach wieder in den Wirbelschichtreaktor geführten Feststoffstromes.

Obgleich sich die vorstehend skizzierten Verfahren in hohem Maße bewährt haben, treten bei dem vorhandenen Trend zu Anlageneinheiten mit zunehmend größerer Wärmeleistung gewisse Schwierigkeiten in der Verfahrensführung auf. Sie bestehen im wesentlichen darin, daß größere Wärmeleistungen größere Reaktorabmessungen, insbesondere größere Reaktorquerschnitte, erfordern, bei denen die für die Umsetzung erforderliche einwandfreie Quervermischung von Brennstoff und dergl. bzw. sauerstoffhaltigem Sekundärgas über die gesamte Fläche des Wirbelschichtreaktors im Bereich des Aufgabeortes nicht mehr gewährleistet ist. Die Folge ist, daß sich die Umsetzung zu einem erheblichen Teil in den oberen Reaktorraum verlagert, gegebenenfalls eine Nachverbrennung nach Trennung von Feststoff und Gas im Feststoffabscheider eintritt.

Aufgabe der Erfindung ist, eine aus Wirbelschichtreaktor, Feststoffabscheider und Rückführleitung gebildete Wirbelschichtanlage zur Durchführung von exothermen Prozessen in der zirkulierenden Wirbelschicht bereitzustellen, die auch bei hoher Verbrennungsleistung einen einwandfreien Betrieb gewährleistet.

Die Aufgabe wird gelöst, indem die eingangs genannte Wirbelschichtanlage ausgestaltet wird durch einen oder mehrere, 40 bis 75% der Bodenfläche des Wirbelschichtreaktors (1) abdeckende Verdrängungskörper (7) mit einer maximalen Höhe gleich der halben Höhe des Wirbelschichtreaktors (1) und Einrichtungen (10, 11) zum Eintrag von zusätzlichem, sauerstoffhaltigen Sekundärgas.

Zwar ist aus der JP-A-58-19614 eine nach dem Prinzip der klassischen Wirbelschicht arbeitende Verbrennungsvorrichtung bekannt, die auf dem Düsenrost angeordnete Verdrängungskörper aufweist. Hierdurch soll u.a. eine Abscheidung von Partikeln auf dem Düsenrost und die Bildung von Ansätzen vermieden werden. Mangels einer in der bekannten Vorrichtung vorgesehenen gestuften Verbrennung tritt das Problem einer einwandfreien Quervermischung von Brennstoff und Sekundärgas über die gesamte Reaktorfläche nicht auf.

Die geometrische Gestalt des Verdrängungskörpers ist weitgehend beliebig. Beispielsweise kann er bei kreisförmigem Querschnitt des Wirbelschichtreaktors die Form eines Zylinders oder Kegelstumpfes besitzen, wobei der Mittelpunkt der unteren Kreisfläche etwa auf dem Mittelpunkt der Bodenfläche ruht. Bei rechteckigem Reaktorquerschnitt kann der Verdrängungskörper die Form eines Dammes besitzen, der gegebenenfalls an seinen Enden an die parallel verlaufenden Reaktorwände anschließt und so den unteren Reaktorraum in zwei getrennte Kammern teilt. Es sind auch zwei praktisch rechtwinklig zueinander verlaufende Dämme möglich, die — sofern sie an die Reaktorwände anschließen — den unteren Reaktorraum in vier separate Kammern aufteilen.

Der Verdrängungskörper kann aus im Ofenbau üblichem feuerfestem Material gefertigt werden. Er kann auch aus von Kühlmittel durchflossenen Membran- bzw. Flossenwänden, die zum Schutz auf der in den Wirbelschichtreaktor weisenden Seite mit Stampfmasse belegt sind, hergestellt sein. Durch die sowohl in der Wandung als auch im Inneren des Wirbelschichtreaktors befindlichen Eintragsorgane für Sekundärgas ist eine optimale Durchmischung mit Sekundärgas in den einzelnen Kammern oder Kammerbereichen gewährleistet.

Gemäß einer bevorzugten Ausgestaltung der Erfindung besitzt die Wirbelschichtanlage einen Verdrängungskörper mit in mehreren Ebenen angeordneten Einrichtungen zum Eintrag von sauerstoffhaltigem Sekundärgas.

Eine weitere vorteilhafte Ausführungsform der Erfindung sieht Verdrängungskörper mit nach oben abnehmender Querschnittsfläche vor. Hierdurch und in Verbindung mit der vorgenannten Ausführungsform ist erreichbar, daß die Strömungsgeschwindigkeit im dem Verdrängungskörper aufweisenden Reaktorbereich trotz Sekundärgaszufuhr nur in gewissen Grenzen schwankt.

Das in der Wirbelschichtanlage angewendete Prinzip der zirkulierenden Wirbelschicht zeichnet sich dadurch aus, daß — im Unterschied zur "klassischen" Wirbelschicht, bei der eine dichte Phase durch einen deutlichen Dichtesprung von dem darüber befindlichen Gasraum getrennt ist—Verteilungszustände ohne definierte Grenzschicht vorliegen. Ein Dichtesprung zwischen dichter Phase und darüber befindlichem Staubraum ist nicht existent ; jedoch nimmt innerhalb des Reaktors die Feststoffkonzentration von unten nach oben ständig ab.

Bei der Definition der Betriebsbedingungen über die Kennzahlen von Froude und Archimedes ergeben sich die Bereiche :

$$0,1 \leq 3/4 \cdot Fr^2 \cdot \frac{\rho g}{\rho k - \rho g} \leq 10,$$

bzw.

$$0,01 \leq Ar \leq 100,$$

wobei

$$Ar = \frac{d_k^3 \cdot g \, (\rho k - \rho g)}{\rho g \cdot \nu^2} \ und$$

$$Fr^2 = \frac{u^2}{g \cdot d_k}$$

sind.
Es bedeuten :

u     die relative Gasgeschwindigkeit in m/s
Ar     die Archimedes-Zahl
Fr     Froude-Zahl
$\rho g$     die Dichte des Gases in kg/m³
$\rho k$     die Dichte des Feststoffteilchens in kg/m³
$d_k$     den Durchmesser des kugelförmigen Teilchens in m
$\nu$     die kinematische Zähigkeit in m²/s
g     die Gravitationskonstante in m/s²

Die exotherme Reaktion wird zweistufig mit in unterschiedlicher Höhe zugeführten sauerstoffhaltigen Gasen durchgeführt. Ihr Vorzug liegt in einer "weichen" Umsetzung, bei der lokale Überhitzungserscheinungen vermieden werden und eine $NO_x$-Bildung weitgehend zurückgedrängt wird. Dabei sollte die obere Zufuhrstelle für sauerstoffhaltiges Gas so weit über der unteren liegen, daß der Sauerstoffgehalt des an der unteren Stelle zugeführten Gases bereits weitgehend verzehrt ist.

Ist als Prozeßwärme Dampf erwünscht, besteht eine vorteilhafte Ausführungsform der Erfindung darin, oberhalb der oberen Gaszuführung eine mittlere Suspensionsdichte von 15 bis 100 kg/m³ durch Einstellung der Fluidisierungs- und Sekundärgasmengen zu schaffen und die Reaktionswärme durch im freien Raum des Wirbelschichtreaktors oberhalb der obersten Sekundärgaszuführung und/oder an der Wand des Wirbelschichtreaktors angeordnete Heizflächen abzuführen.

Eine derartige Arbeitsweise ist in der DE-AS 2539546 bzw. in der entsprechenden US-PS 4165717 näher beschrieben.

Die im Wirbelschichtreaktor oberhalb der Sekundärgaszuführung herrschenden Gasgeschwindigkeiten liegen bei Normaldruck im Regelfall über 5 m/s und können bis zu 15 m/s betragen, und das Verhältnis von Durchmesser zu Höhe des Wirbelschichtreaktors sollte derart gewählt werden, daß Gasverweilzeiten von 0,5 bis 8,0 s, vorzugsweise 1 bis 4 s, erhalten werden.

Innerhalb jeder Eintragsebene sind mehrere Zuführungsöffnungen für Sekundärgas vorteilhaft.

Der Vorteil dieser Arbeitsweise besteht insbesondere darin, daß in einfachster Weise eine Veränderung in der Gewinnung der Prozeßwärmemenge durch Veränderung der Suspensionsdichte im oberhalb der Sekundärgaszuführung befindlichen Ofenraum des Wirbelschichtreaktors möglich ist.

Mit einem herrschenden Betriebszustand unter vorgegebenen Fluidisierungsgas- und Sekundärgasvolumina und daraus resultierender bestimmter, mittlerer Suspensionsdichte ist ein bestimmter Wärmeübergang verbunden. Der Wärmeübergang auf die Kühlflächen kann erhöht werden, indem durch Erhöhung der Fluidisierungsgasmenge und gegebenenfalls auch der Sekundärgasmenge die Suspensionsdichte erhöht wird. Mit dem erhöhten Wärmeübergang ist bei praktisch konstanter Verbrennungstemperatur die Möglichkeit zur Abfuhr der bei erhöhter Verbrennungsleistung entstehenden Wärmemengen gegeben. Der aufgrund der höheren Verbrennungsleistung erforderliche erhöhte Sauerstoffbedarf ist hierbei durch die zur Erhöhung der Suspensionsdichte verwendeten höheren Fluidisierungsgasund gegebenenfalls Sekundärgasmengen quasi automatisch vorhanden.

Analog läßt sich zur Anpassung an einen verringerten Prozeßwärmebedarf die Verbrennungsleistung durch Verringerung der Suspensionsdichte im oberhalb der Sekundärgasleitung befindlichen Ofenraum des Wirbelschichtreaktors regeln. Durch die Erniedrigung der Suspensionsdichte wird auch der Wärmeübergang verringert, so daß aus dem Wirbelschichtreaktor weniger Wärme abgeführt wird. Im wesentlichen ohne Temperaturänderung läßt sich dadurch die Verbrennungsleistung zurücknehmen.

Der Eintrag des zur exothermen Umsetzung befähigten Materials erfolgt am zweckmäßigsten über ein oder mehrere Eintragssysteme, z.B. durch pneumatisches Einblasen.

Eine weitere zweckmäßige, universeller anwendbare Ausgestaltung der Erfindung besteht in einer Wirbelschichtanordnung mit mindestens einem über Feststoffzuführ- und Feststoffrückführleitungen angeschlossenen Wirbelschichtkühler. Im Wirbelschichtreaktor wird oberhalb der oberen Sekundärgaszuführung eine mittlere Suspensionsdichte von 10 bis 40 kg/m$^3$ durch geeignete Regelung der Fluidisierungs- und Sekundärgasmengen eingestellt, heißer Feststoff der zirkulierenden Wirbelschicht entnommen, im Wirbelzustand durch direkten und indirekten Wärmeaustausch gekühlt und mindestens ein Teilstrom gekühlten Feststoffes in die zirkulierende Wirbelschicht zurückgeführt.

Diese Ausführungsform ist in der DE-OS 2624302 bzw. in der entsprechenden US-PS 4111158 näher erläutert.

Hierbei läßt sich die Temperaturkonstanz praktisch ohne Änderung der im Wirbelschichtreaktor herrschenden Betriebszustände, also etwa ohne Veränderung der Suspensionsdichte u.a., allein durch geregelte Abführung heißen Feststoffes und geregelte Rückführung des gekühlten Feststoffes erreichen. Je nach Leistung und eingestellter Reaktionstemperatur ist die Rezirkulationsrate mehr oder minder hoch. Die Temperaturen lassen sich von sehr niedrigen Temperaturen, die nahe oberhalb der Zündgrenze liegen, bis zu sehr hohen Temperaturen, die etwa durch Erweichung der Reaktionsrückstände begrenzt sind, beliebig einstellen. Sie können etwa zwischen 450 und 950°C liegen.

Da hierbei die Entnahme der bei der exothermen Umsetzung gebildeten Wärme überwiegend im feststoffseitig nachgeschalteten Wirbelschichtkühler erfolgt und ein Wärmeübergang auf im Wirbelschichtreaktor befindliche Kühlregister, die eine hinreichend hohe Suspensionsdichte zur Voraussetzung hat, von untergeordneter Bedeutung ist, ergibt sich als weiterer Vorteil dieses Verfahrens, daß die Suspensionsdichte im Bereich des Wirbelschichtreaktors oberhalb der Sekundärgaszuführung niedrig gehalten werden kann und mithin der Druckverlust im gesamten Wirbelschichtreaktor vergleichsweise gering ist. Statt dessen erfolgt der Wärmeentzug im Wirbelschichtkühler unter Bedingungen, die einen extrem hohen Wärmeübergang, etwa im Bereich von 300 bis 500 Watt/m$^2$ · °C, bewirken.

Die Temperatur im Wirbelschichtreaktor wird geregelt, indem mindestens ein Teilstrom gekühlten Feststoffes aus dem Wirbelschichtkühler rückgeführt wird. Beispielsweise kann der erforderliche Teilstrom gekühlten Feststoffes direkt in den Wirbelschichtreaktor eingetragen werden. Es kann zusätzlich auch das Abgas durch Eintrag gekühlten Feststoffes, der beispielsweise einer pneumatischen Förderstrecke oder einer Schwebeaustauscherstufe aufgegeben wird, gekühlt werden, wobei der vom Abgas später wieder abgetrennte Feststoff dann in den Wirbelschichtkühler zurückgeleitet wird. Dadurch gelangt auch die Abgaswärme letztlich in den Wirbelschichtkühler. Besonders vorteilhaft ist es, gekühlten Feststoff als einen Teilstrom direkt und als einen weiteren indirekt nach Kühlung der Abgase in den Wirbelschichtreaktor einzutragen.

Auch bei dieser Ausgestaltung der Erfindung sind die Gasverweilzeiten, Gasgeschwindigkeiten oberhalb der Sekundärgasleitung bei Normaldruck und Art der Fluidisierungs- bzw. Sekundärgaszuführung in Übereinstimmung mit den gleichen Parametern der zuvor behandelten Ausführungsform.

Die Rückkühlung des heißen Feststoffes des Wirbelschichtreaktors sollte in einem Wirbelschichtkühler mit mehreren nacheinander durchflossenen Kühlkammern, in die miteinander verbundene Kühlregister eintauchen, im Gegenstrom zum Kühlmittel erfolgen. Hierdurch gelingt es, die Verbrennungswärme an eine vergleichsweise kleine Kühlmittelmenge zu binden.

Eine andere Ausgestaltung der Wirbelschichtanlage mit angeschlossenem Wirbelschichtkühler besteht darin, diesen mit dem Wirbelschichtreaktor zu einer baulichen Einheit zu verbinden. In diesem Fall besitzen der Wirbelschichtreaktor und der Wirbelschichtkühler eine gemeinsame, zweckmäßigerweise gekühlte Wand, die eine Durchtrittsöffnung für gekühlten Feststoff in den Wirbelschichtreaktor aufweist. Hierbei kann der Wirbelschichtkühler — wie vorstehend erörtert — mehrere Kühlkammern besitzen, er kann aber auch aus mehreren mit Kühlflächen ausgestatteten Einheiten bestehen, die jeweils mit dem Wirbelschichtreaktor eine gemeinsame Wand mit Durchtrittsöffnung für Feststoff und eine eigene Feststoffversorgungsleitung aufweisen. Eine derartige Vorrichtung ist in der EP-A-206066 beschrieben.

Die Universalität der Ausgestaltung mit Wirbelschichtkühler ist insbesondere dadurch gegeben, daß sich im Wirbelschichtkühler nahezu beliebige Wärmeträgermedien aufheizen lassen. Von besonderer Bedeutung aus technischer Sicht ist die Erzeugung von Dampf unterschiedlichster Form und die Aufheizung von Wärmeträgersalz.

Innerhalb der Erfindung können als sauerstoffhaltige Gase Luft oder mit Sauerstoff angereicherte Luft oder technisch reiner Sauerstoff eingesetzt werden. Schließlich kann eine Leistungssteigerung erzielt werden, wenn die Umsetzung unter Druck, etwa bis 20 bar, durchgeführt wird.

In die erfindungsgemäße Wirbelschichtanlage können prinzipiell alle selbstgängig verbrennbaren Materialien eingesetzt werden. Beispiele sind Kohlen aller Art, insbesondere solche minderer Qualität, wie Kohlewaschberge, Schlammkohle, Kohle mit hohem Salzgehalt, aber auch Braunkohle und Ölschiefer. Sie kann auch der Abröstung sulfidischer Erze oder Erzkonzentrate dienen.

Die Erfindung wird anhand der beigefügten Figuren und Beispiele beispielsweise und näher erläutert. Es veranschaulichen :

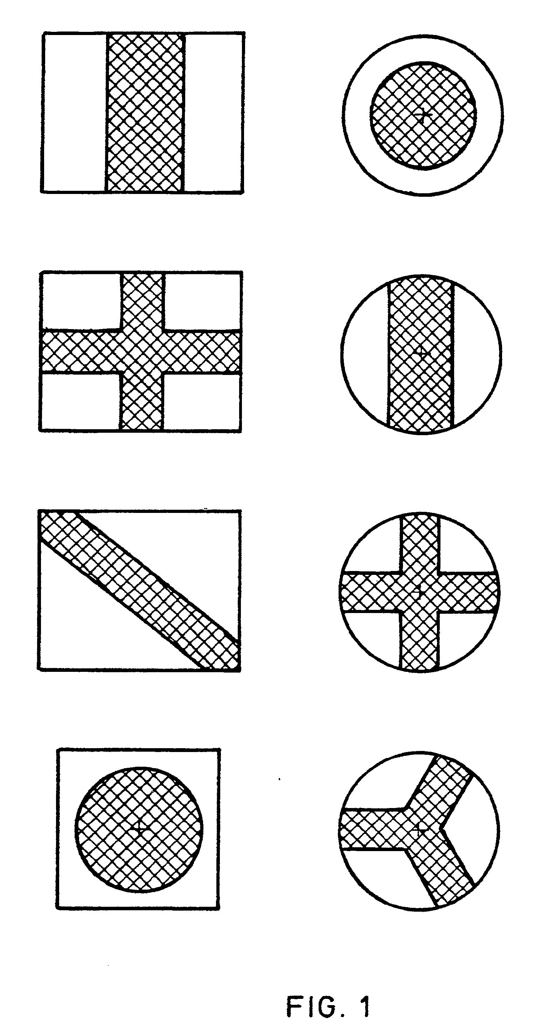

Fig. 1    verschiedene Beispiele für die Ausgestaltung des Verdrängungskörpers bei Wirbelschichtreaktoren mit kreisförmigem oder rechteckigem Querschnitt in Form einer Draufsicht.

Fig. 2    den unteren Bereich des Wirbelschichtreaktors mit Verdrängungskörper in perspektivischer Darstellung.

Fig. 3    einen Längsschnitt durch den Wirbelschichtreaktor.

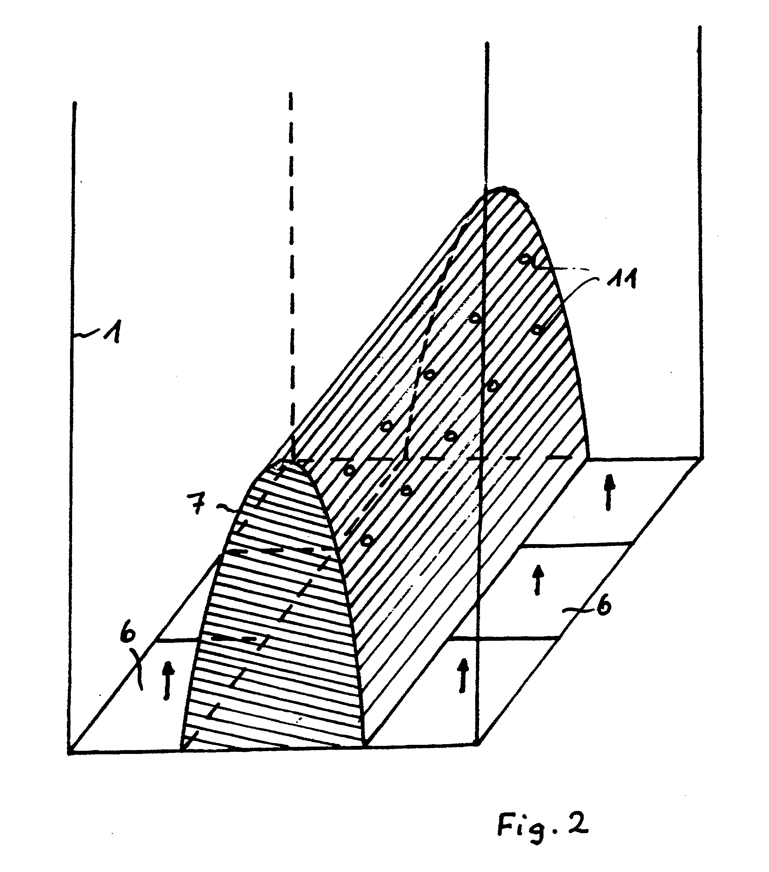

In Fig. 2 ist der Wirbelschichtreaktor schematisch angedeutet und mit 1 bezeichnet. Dessen Bodenfläche ist mit einem dammförmigen Verdrängungskörper 7 teilweise abgedeckt, so daß zwei Fluidisierungsroste 6 gebildet werden. Der Verdrängungskörper besitzt im oberen Bereich Sekundärgasöffnungen 11.

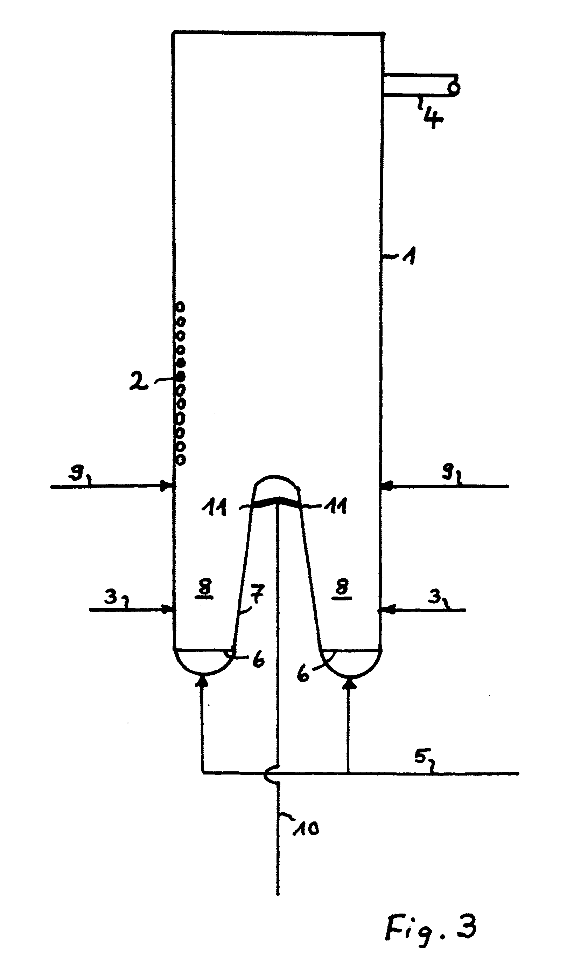

Der Wirbelschichreaktor 1 gemäß Fig. 3 besitzt Heizflächen 2, die als Membranwand angedeutet sind. Die Versorgung der unteren Reaktorkammer 8, die durch den Verdrängungskörper 7 in zwei Bereiche aufgeteilt ist, erfolgt über Leitung 5 und Fluidisierungsrost 6 mit sauerstoffhaltigem Fluidisierungsgas, über Leitungen 3 mit Brennstoff und über Leitungen 9 mit sauerstoffhaltigem Sekundärgas. Über Leitung 10 und Sekundärgasöffnungen 11 wird zusätzliches Sekundärgas aufgegeben. Der Austritt der Gas/Feststoff-Suspension erfolgt über Leitung 4.

Beispiel

Es wurde Kohle mit Luft unter Erzeugung von Sattdampf verbrannt.

Der Wirbelschichtreaktor 1 der Wirbelschichtanlage besaß eine Grundfläche von 12,8 × 10 m und eine Höhe von 40 m. Seine Bodenfläche war durch einen Verdrängungskörper 7 mit einer Grundfläche von 7,6 × 10 m abgedeckt, so daß zwei Kammern mit Fluidisierungsrosten 6 der Abmessungen 2,6 × 10 m resultierten. Der Verdrängungskörper 7 besaß die Form eines Dammes, dessen Flanken um 75° gegen die Horizontale geneigt waren. Die Dammkrone befand sich 1,5 m über der Sekundärgaszuführung 9, die ihrerseits 8,5 m über dem Fluidisierungsrost 6 angeordnet war.

Die Wandfläche des Wirbelschichtreaktors 1 war vollständig mit wassergekühlten Membranwänden ausgekleidet. Auch die Wände des Verdrängungskörpers 7 waren als wassergekühlte Membranwände ausgestaltet, die reaktorseitig mittels Feuerfestmaterial geschützt waren.

In den Wirbelschichtreaktor 1 wurden 88 t/h Kohle mit einem Heizwert von $H_u$ = 24,6 MJ/kg und einem mittleren Korndurchmesser von 0,2 mm mit Hilfe von 8800 Nm³/h Luft von 100°C über Leitungen 3 eingetragen. Als Fluidisierungsgas diente Luft von 255°C, die in einer Menge von zweimal 144 000 Nm³/h durch die Fluidisierungsroste 6 zugeführt wurde. Über die Sekundärgasleitungen 9 erfolgte eine weitere Zuführung von Luft von 260°C in einer Menge von 250000 Nm³/h. Schließlich wurden weitere 90 000 Nm³/h Luft von 260°C über die Sekundärgasöffnungen 11 aufgegeben, die 7 m über dem Fluidisierungsrost 6 lagen.

Aufgrund der gewählten Betriebsbedingungen herrschte im Wirbelschichtreaktor 1 eine Temperatur von 850°C. Die Suspensionsdichte unterhalb der Sekundärgaszuführungen 9 und 11 lag bei 100 kg/m³ Reaktorvolumen. Über die Heizflächen 2 wurde Sattdampf von 140 bar entsprechend einer thermischen Leistung von 120 MW erzeugt. Weiterer Sattdampf von 140 bar entsprechend einer thermischen Leistung von 6 MW wurde mit Hilfe der Membranwände des Verdrängungskörpers 7 gewonnen.

## Patentansprüche

1. Aus Wirbelschichtreaktor, Feststoffabscheider und Rückführleitung gebildete Wirbelschichtanlage zur Durchführung von exothermen Prozessen in der zirkulierenden Wirbelschicht mit Leitungen zur Zufuhr sauerstoffhaltiger Primärgase durch den Boden des Wirbelschichtreaktors und Leitungen zur Zufuhr sauerstoffhaltiger Sekundärgase in eine Höhe von mindestens 1 m über dem Reaktorboden, jedoch maximal 30% der Reaktorhöhe, sowie einer zwischen Primär- und Sekundärgaszuführung in den Wirbelschichtreaktor mündenden Brennstoffleitung, gekennzeichnet durch einen oder mehrere, 40 bis 75% der Bodenfläche des Wirbelschichtreaktors (1) abdeckende(n) Verdrängungskörper (7), mit einer maximalen Höhe gleich der halben Höhe des Wirbelschichtreaktors (1) und Einrichtungen (10, 11) zum Eintrag von zusätzlichem, sauerstoffhaltigen Sekundärgas.

2. Wirbelschichtanlage nach Anspruch 1, gekennzeichnet durch einen oder mehrere Verdrängungskörper (7) mit in mehreren Ebenen angeordneten Einrichtungen (11) zum Eintrag von sauerstoffhaltigen Sekundärgasen.

3. Wirbelschichtanlage nach Anspruch 1 oder 2, gekennzeichnet durch einen oder mehrere Verdrängungskörper (7) mit nach oben abnehmender Querschnittsfläche.

4. Wirbelschichtanlage nach Anspruch 1, 2 oder 3, gekennzeichnet durch im freien Raum des Wirbelschichtreaktors (1) oberhalb der obersten Sekundärgaszuführung (9) und/oder an der Wand des Wirbelschichtreaktors (1) angeordnete Heizflächen (2).

5. Wirbelschichtanlage nach Anspruch 1, 2, 3 oder 4, gekennzeichnet durch mindestens einen über Feststoffzuführ- und Feststoffrückführleitungen angeschlossenen Wirbelschichtkühler.

## Claims

1. A fluidised bed system comprising a fluidised bed reactor, a solids separator and a return line for performing exothermic processes in the circulating fluidised bed, with lines for supplying oxygen- containing primary gases through the bottom of the fluidised bed reactor and lines for supplying oxygen- containing secondary gases at a height of at least 1 m above the bottom of the reactor but at most at 30% of the reactor height, and also a fuel line which opens into the fluidised bed reactor between the primary and secondary gas inlet means, characterised by one or more displacement bodies (7) covering 40 to 75% of the bottom surface of the fluidised bed reactor (1), having a maximum height which is equal to one half of the height of the fluidised bed reactor (1) and means (10, 11) for introducing additional, oxygen-containing secondary gas.

2. A fluidised bed system according to Claim 1, characterised by one or more displacement bodies (7) with means (11) for introducing oxygen-containing secondary gases arranged on a plurality of levels.

3. A fluidised bed system according to Claim 1 or 2, characterised by one or more displacement bodies (7) having a cross-sectional surface area which decreases upwards.

4. A fluidised bed system according to Claim 1, 2 or 3, characterised by heating surfaces (2) arranged in the free space of the fluidised bed reactor (1) above the uppermost secondary gas inlet (9) and/or on the wall of the fluidised bed reactor (1).

5. A fluidised bed system according to Claim 1, 2, 3 or 4, characterised by at least one fluidised bed cooler connected via solids supply and solids return lines.

## Revendications

1. Installation à lit fluidisé, formée d'un réacteur à lit fluidisé, d'un séparateur de matière solide et d'un conduit de recyclage, et destinée à effectuer des processus exothermiques en lit fluidisé circulant, comprenant des conduits destinés à amener des gaz primaires contenant de l'oxygène à travers le fond du réacteur à lit fluidisé et des conduits destinés à amener des gaz secondaires contenant de l'oxygène à un niveau d'au moins un mètre au-dessus du fond du réacteur, mais à 30% au plus de la hauteur du réacteur, ainsi qu'un conduit pour du combustible débouchant dans le réacteur à lit fluidisé entre le conduit d'amenée des gaz primaires et le conduit d'amenée des gaz secondaires, caractérisée par un ou par plusieurs corps de refoulement (7) recouvrant de 40 à 75% de la surface du fond du réacteur à lit fluidisé (1), ayant une hauteur maximum égale à la moitié de la hauteur du réacteur à lit fluidisé (1) et muni de dispositifs (10, 11) d'introduction de gaz secondaires supplémentaires contenant de l'oxygène.

2. Installation à lit fluidisé suivant la revendication 1, caractérisée par un ou par plusieurs corps de refoulement (7) ayant des dispositifs (11) d'introduction de gaz secondaires contenant de l'oxygène qui sont disposés dans plusieurs plans.

3. Installation à lit fluidisé suivant la revendication 1 ou 2, caractérisée par un ou par plusieurs corps de refoulement (7), dont la surface de la section transversale diminue vers le haut.

4. Installation à lit fluidisé suivant la revendication 1, 2 ou 3, caractérisée par des surfaces de chauffe (2) disposées dans l'espace libre du réacteur à lit fluidisé (1) au-dessus du conduit (9) le plus élevé destiné à amener le gaz secondaire et/ou sur la paroi du réacteur à lit fluidisé (1).

5. Installation à lit fluidisé suivant la revendication 1, 2, 3 ou 4, caractérisée par au moins un dispositif de refroidissement à lit fluidisé, raccordé à des conduits d'amenée de la matière solide et à des conduits de recyclage de la matière solide.

# FIG. 1

Fig. 2

Fig. 3